(19) Europäisches Patentamt

European Patent Office

Office européen des brevets

(11) Veröffentlichungsnummer: **0 163 186 B1**

(12) **EUROPÄISCHE PATENTSCHRIFT**

(45) Veröffentlichungstag der Patentschrift: **26.02.92**

(21) Anmeldenummer: **85105813.1**

(22) Anmeldetag: **11.05.85**

(51) Int. Cl.⁵: **B23D 51/00**, B23D 49/16

(54) **Stichsäge zum Bearbeiten von Werkstücken z.B. aus Holz, Kunststoffmaterial oder Metall.**

(30) Priorität: **01.06.84 DE 3420442**

(43) Veröffentlichungstag der Anmeldung:
**04.12.85 Patentblatt 85/49**

(45) Bekanntmachung des Hinweises auf die
Patenterteilung:
**26.02.92 Patentblatt 92/09**

(84) Benannte Vertragsstaaten:
**CH GB IT LI**

(56) Entgegenhaltungen:
FR-A- 2 327 845      FR-A- 2 490 137
GB-A- 778 019       US-A- 2 369 925
US-A- 2 984 757      US-A- 3 339 598
US-A- 3 586 077      US-A- 4 091 701
US-A- 4 334 356

(73) Patentinhaber: **Festo KG**
**Ulmer Strasse 48**
**W-7300 Esslingen a.N.(DE)**

(72) Erfinder: **Maier, Peter, Dipl. Ing.**
**Gerokstrasse 1**
**W-7311 Neidlingen(DE)**
Erfinder: **Hänsel, Gernot, Dipl.-Ing.**
**Gerstenstrasse 31**
**W-7000 Stuttgart 70(DE)**
Erfinder: **Henzler, Rolf**
**Filsstrasse 7**
**W-7440 Nürtingen(DE)**
Erfinder: **Walter, Hartmut, Dipl.-Ing.**
**Im Saemann 71**
**W-7050 Waiblingen(DE)**
Erfinder: **Arnold, Günter**
**Albstrasse 5**
**W-7441 Kohlberg(DE)**

(74) Vertreter: **Magenbauer, Rudolf, Dipl.-Ing. et al**
**Patentanwälte Dipl.-Ing. Rudolf Magenbauer**
**Dipl.-Phys. Dr. Otto Reimold Hölderlinweg 58**
**W-7300 Esslingen(DE)**

EP 0 163 186 B1

## Beschreibung

Die Erfindung bezieht sich auf eine Stichsäge mit einem Antriebsaggregat, das einen Sägeblatthalter treibt, an dem ein Sägeblatt befestigbar ist, und mit Führungsmitteln zum Führen des Sägenkörpers gegenüber der Werkstückoberfläche, sowie mit einem das Antriebsaggregat tragenden Sägetisch, der an seiner Unterseite einen auf dem zu bearbeitenden Werkstück mit einer Laufsohle auflegbaren Laufschuh enthält.

Motorgetriebene Stichsägen sind für gewerbliche Anwendungen und im Heimwerkerbereich weit verbreitet. Sie besitzen einen Sägetisch, der einen Motorkopf mit einem Antriebsaggregat trägt. Letzteres treibt einen Sägeblatthalter in einer hin- und hergehenden Hubbewegung an. An dem Sägeblatthalter läßt sich ein Sägeblatt spannen, das durch den Sägetisch hindurchgreift. Im Betrieb wird die Stichsäge üblicherweise an dem Motorkopf gehalten und über das zu zersägende Werkstück geführt, wobei sich der Sägetisch auf dem Werkstück abstützt und das überstehende Ende des Sägeblattes gegen das Werkstück arbeitet.

Bei bekannten Stichsägen besteht die Laufsohle am Stichsägentisch aus Stahlblech, wobei die Ecken mehr oder weniger stark abgerundet sind. Es besteht die Gefahr, daß empfindliche Holz- oder Furnieroberflächen zerkratzt oder durch seitliches Anstoßen beschädigt werden. Vor allem ist es schwer, mit den bekannten Stichsägen einen geraden Schnitt zu erzielen. Das freie Ende des Sägeblattes weicht leicht zur Seite hin aus, wodurch sich beim Sägen aus freier Hand ein Verlaufen der Säge ergeben kann. Auf Grund der geringen Stabilität des Sägeblattes ist auch die Materialstärke des zu zersägenden Werkstücks sehr begrenzt. Bei mehr als 30 oder 40 mm dickem Holz drückt sich das Sägeblatt unweigerlich weg, und man erhält völlig unbeabsichtigt einen schrägen Schnitt. Zum Sägen dicker Platten ist daher bei dem bisherigen Stand der Technik der Einsatz einer Kreissäge unerläßlich.

Es wurde bereits vorgeschlagen, die seitliche Beweglichkeit des Sägeblattes mittels einer Führungs- bzw. Andrückrolle zu reduzieren. Die Führungs- bzw. Andrückrolle ist dabei in erheblichem Abstand von der Laufsohle des Sägetisches angeordnet. Sie weist eine umlaufende Nut auf, in die das Sägeblatt eingreift, wobei der Nutgrund gegen den Rücken des Sägeblattes abgestützt ist. Das Sägeblatt soll an den Nutflanken seitlich stabilisiert werden. Diese seitliche Lagerung muß aber großes Spiel aufweisen, weil die Lagerung der Andrückrolle einer sehr starken Verschmutzung durch Sägespäne unterworfen ist. Überdies ist das Sägeblatt im Abstand von der Laufsohle abgefangen. Die Andrückrolle greift mit ungünstigem Hebelarm an dem Sägeblatt an, und unterhalb der Führungs- bzw. Andrückrolle verbleibt ein Stück Sägeblatt von beträchtlicher Länge, das sich ungehindert verformen kann. Auch mit einer derartigen Führungs- bzw. Andrückrolle sind also keine geführten Geradschnitte möglich. Selbst beim Sägen nach geradem Anriß muß die Maschine ständig in der Richtung korrigiert werden.

Bei der Sägeblattanordnung nach der US-PS 33 39 598, die den nächstkommenden Stand der Technik beschreibt, man versucht, mit einer Art von Führungselementen an der beweglich gelagerten, sich mit dem Sägeblatt seitlich hin und her bewegenden Splitterschutzplatte eine Abnutzung des Sägeblattes durch die an diesem anliegenden Kanten der Splitterschutzplatte zu vermeiden. Diese gewissermaßen als Anti-Reibungsfutter dienenden Elemente können ebenfalls ein Verbiegen und Verkanten des Sägeblattes nicht verhindern, die oben diskutierten Nachteile sind auch im vorliegenden Falle vorhanden. Auch bei der Anordnung nach der US-PS 40 91 701 findet sich keine Lösung für das hier anstehende Problem: es handelt sich dort nämlich um eine Vorrichtung zum Zuschneiden von in mehreren Lagen übereinanderliegend aufgelegten Textilstoffen mit Hilfe eines an beiden Enden eingespannten Sägeblattes, bei der schon die Probleme anders gelagert sind.

Demgegenüber liegt die Aufgabe der Erfindung darin, eine Stichsäge der hier in Frage stehenden Art zu schaffen, die bei einfachem Aufbau eine hohe Schnittgenauigkeit besitzt und mit der Sägeschnitte mit hoher Qualität herstellbar sind, wie sie bisher in der Praxis nicht erreicht worden ist, weil jetzt das Sägeblatt so geführt ist, daß es sich nicht verkanten und verbiegen kann.

Zu dem obengenannten Zweck ist bei einer Stichsäge nach dem Oberbegriff des Anspruches 1 gemäß der Erfindung vorgesehen, daß zum Bearbeiten von starren Werkstücken wie Holz zusätzlich zu den als Andrück- oder Pendelrollen mit einer Nut, an deren Nutgrund der Sägeblattrücken anliegt, ausgebildeten Führungsmitteln als Klötze oder Plättchen ausgebildete Stabilisierungselemente vorgesehen sind, die am Sägetisch quer zur Sägerichtung verstellbar und festsetzbar lösbar angebracht sind und hierbei am Sägeblatt von einander entgegengesetzten Seiten flach anliegen und es hierbei unmittelbar oberhalb seiner Laufsohle seitlich so führen, daß das Sägeblatt gegenüber dem Sägetisch quer zur Vorschubrichtung keine Bewegung ausführen kann, um es so am "Verlaufen" zu hindern und vor Verkanten und Verbiegen zu schützen.

Beim Erfindungsgegenstand ergeben sich durch Lösen der oben geschilderten Aufgabe eine ganze Reihe von Vorteilen, die unten aufgeführt sind:

- es wird ein präziser, gerader Schnitt erzielt, da der freie Endbereich des Sägeblattes seitlich abgestützt ist. Das Sägeblatt kann nicht "verlaufen", da die Stabilisierung so nahe wie möglich am Werkstück erfolgt.
- Aufgrund des genauen, geraden Schnittes erfolgt kein Verkanten des Sägeblattes mehr, das durch Richtungskorrekturen hervorgerufen werden könnte. Daraus folgt: saubere Schnittqualität, kaum Ausreißen bzw. Ausfransen der Werkstückoberfläche.
- Durch die größere Dicke des Sägeblattes erfolgt eine Verbesserung des Geradeauslaufes infolge der Erhöhung der Biegesteifigkeit des Sägeblattes.
- Es ergibt sich eine sehr genaue Führung der Stichsäge durch die Führungsplatte. Daraus folgt: mit geringem konstruktivem Aufwand hohe Präzision des Geradschnittes.
- Die metallische Fußplatte verleiht Steifigkeit, der Laufschuh aus Kunststoff ermöglicht reibungsarmes Gleiten der Säge auf dem Werkstück. Daraus folgt: Beschädigungen der Oberfläche sind vermieden, gleichzeitig wirkt das Kunststoffmaterial als Schwingungs- und Schlagdämpfung, wodurch die Genauigkeit des Sägeschnittes erhöht wird. Beispielsweise kann einer vorgezeichneten Anrißlinie leichter gefolgt werden.
- Nicht zuletzt soll auch noch eine Verbesserung der Genauigkeit von Gerad- und Kurvenschnitten genannt werden.

Wenn die Fußplatte des Sägetisches aus Metall ist, während der Laufschuh aus Kunststoff besteht und allseits über den Rand der Fußplatte hinaussteht, verleiht die metallische Fußplatte dem Sägetisch die erforderliche Steifigkeit, die durch eine geeignete Anordnung von Verstärkungsrippen erhöht werden kann. Die Fußplatte läßt sich in kostengünstiger Weise einstückig mit dem Aufsatz und dem Absaugstutzen aus Aluminium-Druckguß fertigen. Der Kunststofflaufschuh ermöglicht ein reibungsarmes Gleiten der Stichsäge auf dem zu zersägenden Werkstück, wobei ein Zerkratzen empfindlicher Oberflächen und Beschädigungen durch seitliches Anstoßen wirkungsvoll verhindert werden. Das Kunststoffmaterial des Laufschuhs bewirkt überdies eine gewisse Schwingungs- und Schlagdämpfung. Die lösbare Befestigung des Laufschuhs z.B. durch Verschrauben ermöglicht es in vorteilhafter Weise, den Laufschuh bei Verschleiß zu wechseln. Wenn zwischen dem Laufschuh und der Fußplatte eine z.B. klemmend befestigte, elastische Zwischenlage insbesondere aus Gummi angebracht ist, dient diese Zwischenlage zur Abdichtung des Staubabsaugkanals, und sie verbessert zugleich in vorteilhafter Weise die elastischen Eigenschaften des Sägetisches.

Der Motorkopf wird vorzugsweise mit einer Klemmschraube an dem halbzylindrischen Aufsatz des Sägetisches festgelegt, wobei der Kopf der Klemmschraube im Innern des Aufsatzes zu liegen kommt, d.h. im Innern des erfindungsgemäß vorgesehenen Staubabsaugkanals. Die Laufsohle des Sägetisches ist mit einer Öffnung versehen, durch die der Kopf der Klemmschraube von unten her zugänglich ist. Um den Schnittwinkel der Stichsäge zu verändern, löst man mittels eines durch die Öffnung hindurchgeführten Schraubwerkzeugs die Klemmschraube, schwenkt den Motorkopf und zieht die Klemmschraube wieder an. Außerdem kann ein Schieber vorgesehen sein, der die Öffnung freigibt, so daß die Klemmschraube zugänglich wird bzw. die Öffnung im Betrieb verschließt. Hierdurch wird ein Eintritt von Falschluft in dem Absaugkanal verhindert und die Absaugwirkung verbessert. In einer konstruktiv besonders einfachen Ausbildung ist der Schieber unverlierbar zwischen der Fußplatte und dem daran lösbar befestigten Laufschuh eingelegt und an der Fußplatte und/oder dem Laufschuh geführt.

Bei der Erfindung dienen mehrere Maßnahmen zur Verbesserung des Geradschnitts der Stichsäge. Zum einen ist das Sägeblatt auf der Höhe des Sägetisches, und insbesondere unmittelbar oberhalb seiner Laufsohle seitlich geführt. Die zugehörigen Stabilisierungselemente befinden sich also so nahe wie möglich am Werkstück, um ein Verbiegen des Sägeblattes an der Austrittsseite des Schnitts zu verhindern. Sie greifen von der Spannstelle des Sägeblatts her gesehen mit langem Hebelarm am Sägeblatt an, und die Länge des Sägeblatts unterhalb der Führungsstelle ist relativ kurz, wodurch einem seitlichen Ausweichen des Sägeblattes in vorteilhafter Weise entgegengewirkt wird. Die Stabilisierungselemente bestehen vorzugsweise aus einem thermisch hochbelastbaren Material, insbesondere Oxidkeramik wie z.B. Aluminium-Oxidkeramik. Sie sind so bemessen, daß sie seitlich gegen den nicht verzahnten Teil des Sägeblatts arbeiten, d.h. die Schneiden des Sägeblatts nicht berühren. Hierdurch wird u.A. einem raschen Verschleiß der Stabilisierungselemente entgegengewirkt. Hierbei können die Schneiden des Sägeblattes in einem Splitterschutz bzw. Spänefang laufen, der aus einem weichen Material, insbesondere Kunststoff, besteht, in das sich das Sägeblatt zur Erstellung eines Laufspalts einschneiden kann. Der Splitterschutz bzw. Spänefang kommt, vorzugsweise ebenfalls auf der Höhe des Sägetisches, und insbesondere in geringem Abstand von dessen Laufsohle zu liegen. Er verhindert das Absplittern von Teilen des Schnittguts an der Austrittsstelle des Sägeblattes, wodurch ein sehr sauberer Schnitt erzielt wird. Die Späne werden von dem Sägeblatt abgestreift, so daß sie nicht zwischen das Sägeblatt und die Stabilisierungselemente gelangen, und sie werden durch die erfindungsgemäße Absaugeinrichtung in sehr effektiver Weise entfernt. Die Führung des Sägeblattes zwischen den Stabilisierungselementen wird so durch Spanwurf kaum beeinträchtigt, und die Stabilisierungselemente können mit geringem seitlichen oder ohne seitliches Spiel an das Sägeblatt angestellt werden, ohne daß die Gefahr besteht, letzteres zu blockieren. Darüberhinaus empfiehlt es sich, die Stabilisierungselemente quer zu der Sägeblattebene justierbar zu gestalten, um einen Toleranzausgleich und einen Ausgleich verschiedener Sägeblattdicken zu ermöglichen. Weiterhin kann man noch zur Verbesserung des Geradeschnitts durch eine Erhöhung der Sägeblattdicke beitragen. Die nach dem Stand der Technik für Stichsägen verwendeten Sägeblätter haben eine Dicke von maximal 1,35 mm. Durch eine Erhöhung der Dicke auf beispielsweise 1,75 mm steigt die Biegesteifigkeit des Sägeblattes um 118 % an, und sein Geradlauf wird entsprechend verbessert. Wegen des größeren Zerspanungsvolumens ist hiermit zwar eine Minderung der Schnittleistung verbunden, die aber nur unwesentlich ist. Eine Führungsplatte, die auf das zu zersägende Werkstück aufgelegt wird, und den Sägetisch der Stichsäge führt, trägt ebenfalls zur Verbesserung des Geradschnittes bei. Die kombinierte Verwendung von Stabilisierungselementen auf der Höhe des Sägetisches, eines dickeren Sägeblatts und einer Führungsplatte für die Stichsäge erlaubt eine sichere Beherrschung des geführten Geradeschnitts. Mit einer Stichsäge wurde so in einer 19 mm dicken Spanplatte ein 1 m langer Schnitt ausgeführt, der in der Geradhaltig- und Winkeligkeit eine Abweichung von weniger als 0,2 mm aufwies. Ein vergleichbares Ergebnis kann nach dem Stand der Technik nur mit einer Kreissäge erzielt werden. Durch die Erfindung werden also der Stichsäge neue Anwendungsmöglichkeiten insbesondere beim präzisen Sägen dicker Platten erschlossen.

Insgesamt ergibt sich beim Erfindungsgegenstand eine außerordentliche Erhöhung der Schnittgenauigkeit, wie sich aus folgendem ergibt: Durch die Maßnahmen, die zur Stabilisierung des Sägeblattes beitragen, wird eine hohe Schnittgenauigkeit erreicht. Durch die Erhöhung der Biegesteifigkeit des Sägeblattes wird ebenfalls eine Verbesserung der Schnittgenauigkeit und ein besserer Geradeauslauf erreicht. Durch die präzise Führung des Sägeblattes wird die Schnittgenauigkeit ebenfalls erhöht. Durch die Maßnahme zur Schwingungsdämpfung erreicht man, daß das Sägeblatt allgemein ruhiger läuft. Gleichzeitig wird das zu sägende Material geschont, was die Schnittqualität verbessert. Die Versteifung der Fußplatte ergibt einen stabileren Sägevorgang. Die Vibrationen sind gemindert, so daß die Schnittgenauigkeit erhöht wird.

Die Erfindung wird im folgenden anhand eines in den Zeichnungen dargestellten Ausführungsbeispiels näher erläutert.

Es zeigen:

Fig. 1    die Seitenansicht einer Stichsäge, teilweise in der Längsmittelebene geschnitten;

Fig. 2    eine Vorderansicht der Stichsäge mit Blick in Richtung I von Fig. 1, wobei über ein Zwischenstück eine Verbindung zu einer auf das Werkstück auflegbaren Führungsplatte hergestellt ist; das Zwischenstück ist nach II-II von Fig. 3 geschnitten;

Fig. 3    eine Draufsicht auf das Zwischenstück mit Blick in Richtung III von Fig. 2;

Fig. 4    eine Draufsicht auf den Sägetisch der Stichsäge von unten, d.h. in Richtung IV von Fig. 2, wobei der Laufschuh, die Stabilisierungselemente und der Spänefang abmontiert sind und der Schieber sich in seiner Offenstellung befindet;

Fig. 5    eine Fig. 4 entsprechende Ansicht nach Montage der Laufsohle, der Stabilisierungselemente und des Spänefangs mit geschlossenem Schieber;

Fig. 6    einen Schnitt durch Fig. 5 nach VI-VI, wobei Stabilisierungselemente und Splitterschutz bzw. Spänefang abgenommen sind;

Fig. 7    eine vergrößerte Vorderansicht des Spänefangs in Richtung VII von Fig. 6;

Fig. 8    und

Fig. 9    weitere Bauformen der Stabilisierungselemente in einer Fig. 2 entsprechenden Vorderansicht;

Fig. 10   eine Variante zu der Anordnung nach Fig. 2 in derselben Darstellungsweise, jedoch nur schematisch gezeigt;

Fig. 11   der Parallelanschlag der Anordnung nach Fig. 2 in einer Seitenansicht;

Fig. 11a  die Anordnung nach Fig. 11 in Draufsicht;

Fig. 12   den zur Halterung des Parallelanschlags nach Fig. 11 und 11a an der Fußplatte dienenden Bügel in einer Seitenansicht;

Fig. 13   die Anordnung nach Fig. 12 in Draufsicht und

Fig. 14   die in Verbindung mit dem Parallelanschlag nach Fig. 11 und 11a in der Anwendung als sogenannter Kreisschneider zu verwendende Zentrierspitze in einer Ansicht von vorn.

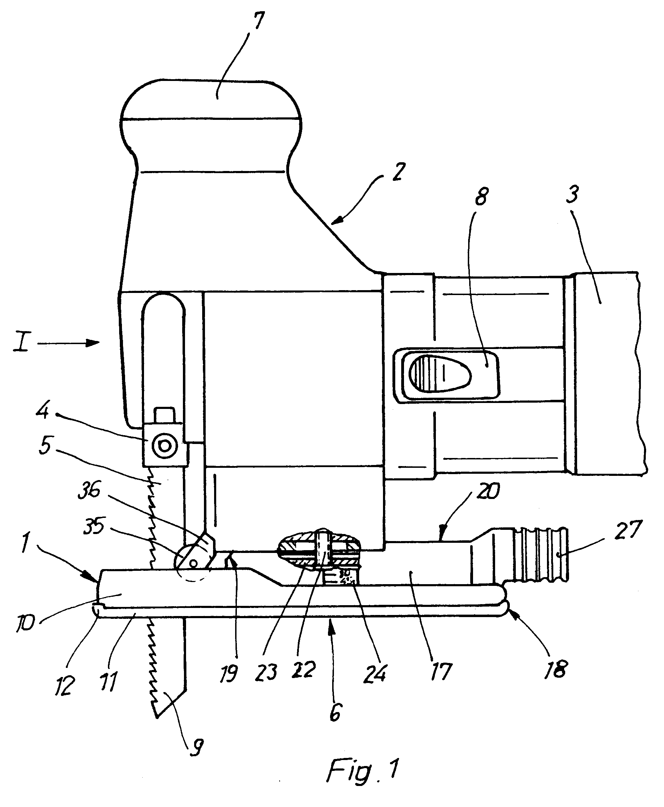

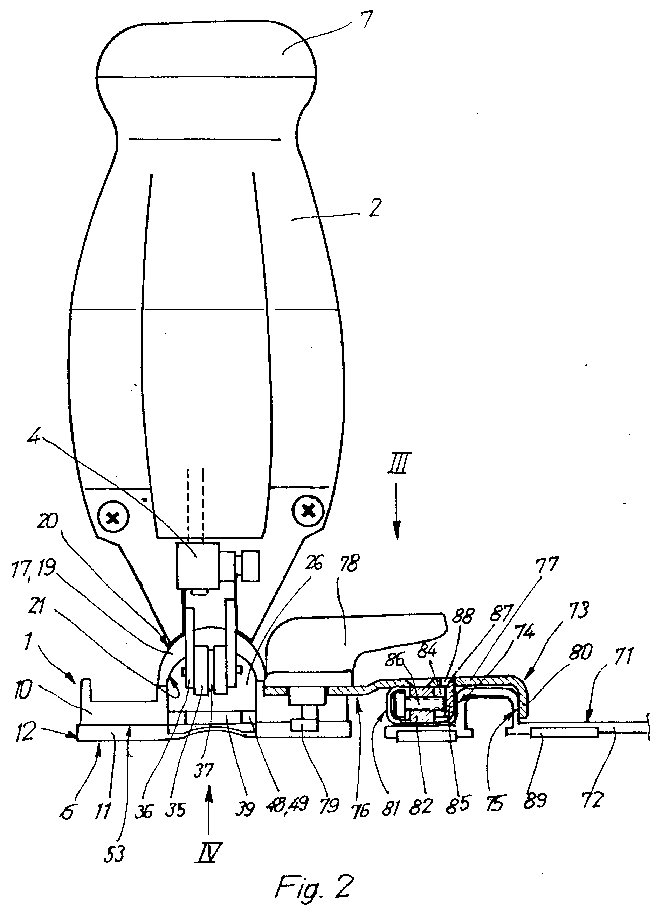

Bezugnehmend zunächst auf Fig. 1 und Fig. 2 ist eine motorgetriebene Handstichsäge dargestellt. Sie besitzt einen Sägetisch 1, der einen Motorkopf (Antriebsmotor und Getriebe) 2 mit einem Antriebsaggregat (Stabmotor) 3 trägt. Das Antriebsaggregat 3 treibt einen Sägeblatthalter 4 in einer periodischen Auf- und Abbewegung an. An dem Sägeblatthalter 4 läßt sich ein nach unten ragendes Sägeblatt 5 spannen, das durch eine Ausnehmung in dem Sägetisch 1 hindurchgreift und über die Laufsohle 6 des Sägetisches 1 hinausragt. Im Betrieb wird die Stichsäge üblicherweise mit dem Sägetisch 1 auf ein zu zersägendes Werkstück aufgesetzt. Man hält die Stichsäge mit einer Hand an den Motorkopf 2, dessen obere Partie als Griffknauf 7 ausgebildet ist, und mit der anderen Hand am Gehäuse des Antriebsaggregats 3, an dem sich auch ein Schalter 8 zum Ein-/Ausschalten und ge- gebenenfalls zur Drehzahlregelung des Antriebsag- gregates 3 befindet. Die Stichsäge wird entsprechend der gewünschten Schnittlinie über das Werkstück geführt, wobei dieses von dem überstehenden Ende 9 des Sägeblattes 5 zersägt wird.

Der Sägetisch 1 ist zweiteilig aufgebaut. Er besteht aus einer Fußplatte 10 und einem lösbar damit verbundenen Laufschuh 11, der die Unterseite der Fußplatte 10 abdeckt und allseits über den Rand der Fußplatte 10 hinaussteht. Die Fußplatte 10 besteht aus Metall, und insbesondere Leichtmetall wie z.B. Aluminium-Druckguß. Der Laufschuh 11 dagegen besteht aus Kunststoff. Er hat die Gestalt einer ebenen Platte mit einem umlaufenden, nach oben abstehenden Randsteg 12. Die Fußplatte 10 wird in den Laufschuh 11 eingesetzt und formschlüssig von dem Randsteg 12 umschlossen. Die lösbare Verbindung zwischen Fußplatte 10 und Laufschuh 11 kann beispielsweise durch Verschrauben hergestellt werden.

Dieser zweiteilige Aufbau des Sägetisches 1 bringt verschiedene Vorteile mit sich. Die metallische Fußplatte 10 verleiht dem Sägetisch 1 die erforderliche Steifigkeit, die durch eine Anordnung geeigneter Verstärkungsrippen bzw. durch die Wahl der Plattendicke noch erhöht und den Erfordernissen entsprechend ausgelegt werden kann. Die Verstärkungsrippen lassen sich durch die un- aufwendige Aluminium-Druckgußtechnik in vielfälti- ger Form einstückig an die Fußplatte 10 anformen. Der aus Kunststoff, und insbesondere einem ther- moplastischen Kunststoffmaterial bestehende Lauf- schuh 11 bringt ein reibungsarmes Gleiten der Stichsäge auf dem zu zersägenden Werkstück mit sich. Empfindliche Werkstückoberflächen werden nicht zerkratzt oder durch seitliches Anstoßen beschädigt, da der Laufschuh 11 die Fußplatte 10 allseitig überragt. Außerdem bewirkt der Laufschuh 11 aus Kunststoff eine gewisse Schwingungs- und Schlagdämpfung. Man kann die Elastizitätseigenschaften des Sägetisches 1 noch verbessern, indem man zwischen der Fußplatte 10 und dem Laufschuh 11 eine elastische Zwischenlage beispielsweise aus Gummi einbringt (nicht dargestellt). Diese Zwischenlage kann klemmend befestigt werden und dadurch eine abdichtende Wirkung haben, die aus nachstehend noch näher erläuterten Gründen wünschenswert ist.

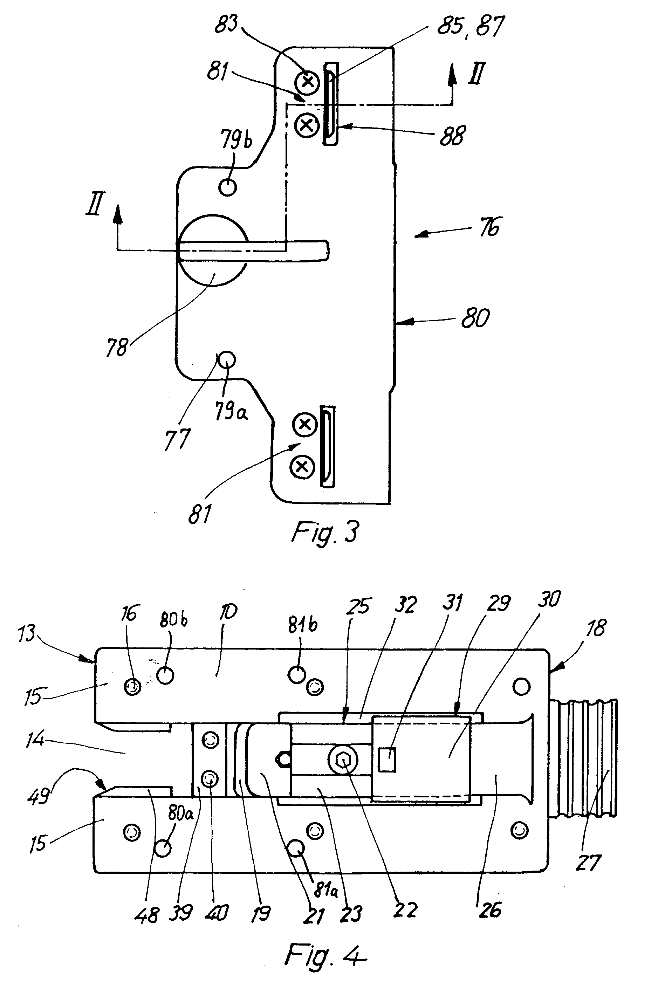

Wie man Fig. 4 entnimmt, hat der Sägetisch 1 einen länglich-rechteckigen Grundriß, wobei im Bereich des Sägeblattes 5 eine zu der Schmalseite 13 hin offene, mittige Ausnehmung 14 vorhanden ist. Der Sägetisch ist hier in einer U-Form geteilt, wobei die Ausnehmung 14 beidseitig durch Laschen 15 flankiert wird. Es versteht sich, daß sowohl die Fußplatte 10 als auch der Laufschuh 11 eine derartige U-Ausnehmung besitzen. Gewindebohrungen zum Verschrauben des Laufschuhs 11 an der Fußplatte 10 sind bei 16 dargestellt.

Gemäß Fig. 1 und Fig. 2 ist mit der Fußplatte 10 des Sägetisches 1 ein hohlprofilförmiger Aufsatz 17 fest verbunden. Der Aufsatz 17 kann insbesondere in Gußtechnik einstückig an die Fußplatte 10 angeformt sein. Er ist mittig an der Oberseite des Sägetisches 1 angeordnet, in dessen Längsrichtung er sich erstreckt. Der Aufsatz 17 reicht dabei von der hinteren Schmalseite 18 des Sägetisches 1 bis dicht vor die Ausnehmung 14, in der das Sägeblatt 5 läuft. Seine Vorderkante ist bei 19 ausgewiesen. Wie man Fig. 2 entnimmt, ist der Aufsatz 17 nach oben gewölbt. Seine Oberseite 20 ist als Mantelabschnitt eines Kreiszylinders konturiert, wobei die Winkelerstreckung in dem dargestellten Ausführungsbeispiel ca. 180° beträgt; der Aufsatz 17 hat also in etwa die Gestalt eines halbierten Kreiszylinders.

Der Aufsatz 17 trägt den Motorkopf 2, der schwenkbar auf der Zylindermantelfläche 20 gelagert ist. Der Motorkopf 2 ist an seiner Unterseite 21 komplementär zu dem Aufsatz 17 konvex gewölbt. Sein Auflager bildet also ebenfalls den Abschnitt einer Zylindermantelfläche, dessen Winkelerstrek- kung aber wesentlich kleiner ist als die des Aufsatzes 17, so daß Spiel für eine Schwenkbewegung besteht. Im montierten Zustand kommt der Motorkopf 2 formschlüssig mit dem Aufsatz 17 zur Anlage, und er wird mittels einer Klemmschraube 22 in gewünschten Winkelstellungen auf dem Aufsatz 17 arretiert.

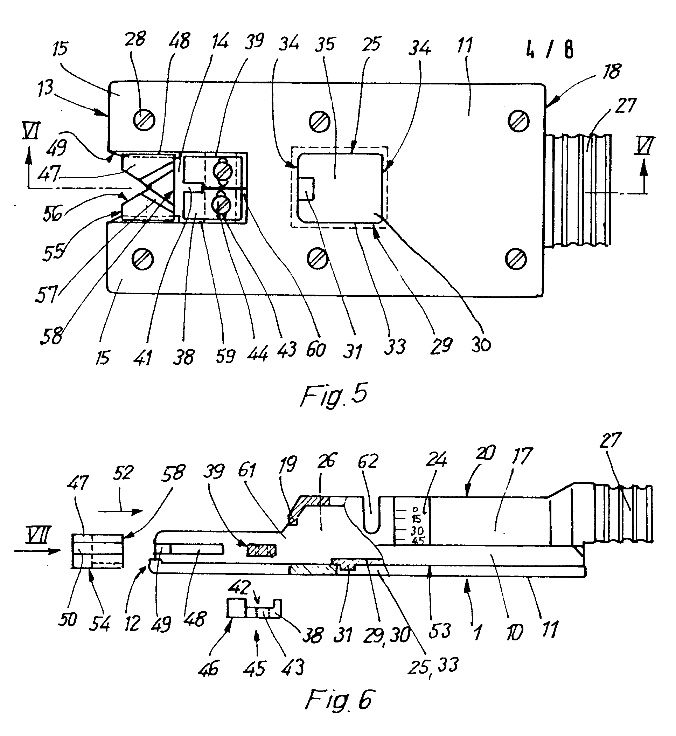

Die Anordnung der Klemmschraube 22 ergibt sich aus dem Anschnitt in Fig. 1. Die Klemmschraube 22 greift von unten her durch ein Langloch 62 (vgl. Fig. 6) in dem Aufsatz 17 hindurch, das sich in Umfangsrichtung der Zylindermantelfläche 20 erstreckt. Der Kopf der Klemmschraube 22 kommt im Innern des Aufsatzes 17 zu liegen, und ihr Schaft ist im Sockel des Motorkopfes 2 verschraubt. Der Kopf der Klemmschraube 22 arbeitet unmittelbar oder unter Zwischenschaltung eines geeigneten Klemmbackens 23 gegen die Innenfläche des Aufsatzes 17. Beim Anziehen der Klemmschraube 22 wird so der Motorkopf 2 gegen den Aufsatz 17 gespannt. In der in Fig. 1 und 2 dargestellten Position des Motorkopfes 2 ist das Sägeblatt 5 senkrecht zu der Sägetischebene orientiert. Die Klemmschraube 22 befindet sich im Zenit des Aufsatzes 17, und es wird ein gerader Sägeschnitt erzielt. Um einen Gehrungsschnitt zu erhalten, wird der Motorkopf 2 mit dem Sägeblatthalter 4 und Sägeblatt 5 auf dem Aufsatz 17 verschwenkt. Man löst hierzu die Klemmschraube 22, indem man mit einem Schraubwerkzeug durch eine noch näher beschriebene Öffnung 25 in dem Sägetisch 1 hindurchgreift. Sodann schwenkt man den Motorkopf 2 (Antriebsmotor und Getriebe) auf dem Aufsatz 17, wobei der Schaft der Klemmschraube 22 in dem erwähnten Langloch 62 läuft, das eigentlich als Kreuzschlitz ausgebildet ist, um eine Verstellung des Tisches auch in Längsrichtung zu ermöglichen. Der Neigungswinkel läßt sich an einer Skala 24 ablesen. Ist der gewünschte Anstellwinkel erreicht, der dem Schnittwinkel des Gehrungsschnittes entspricht, so wird die Klemmschraube 22 wieder festgezogen. In dem dargestellten Ausführungsbeispiel ist ein beidseitiges Schwenken des Motorkopfes 2 um je 45° möglich.

Erfindungsgemäß erfolgt durch den zur Schwenkhalterung des Motorkopfes 2 dienenden Aufsatz 17 zugleich eine Staubabsaugung von der Schnittstelle des Sägeblattes 5. Das Innere des Aufsatzes 17 bildet hierzu einen Absaugkanal, der dicht hinter dem Rücken des Sägeblattes 5 an der Oberseite des Sägetisches 1 mündet. Am gegenüberliegenden Ende des Aufsatzes 17 befindet sich ein Absaugstutzen 27, an den sich eine Absaugleitung z.B. in Form eines elastischen Schlauchs anschließen läßt. Der Absaugstutzen 27 bildet eine axiale Verlängerung des Aufsatzes 17. Er ist einstückig an diesen angeformt, so daß letztendlich die Fußplatte 10, der Aufsatz 17 und der Absaugstutzen 27 auf kostengünstige Weise einstückig im Gußverfahren hergestellt werden können. Der Absaugstutzen 27 ist gegenüber dem Aufsatz 17 nach oben abgekröpft. Er steht über die hintere Schmalseite 18 des Sägetisches 1 hinaus und ist mit geeigneten Halterippen zur Befestigung eines Schlauchs versehen. Die nicht näher dargestellte lichte Öffnung des Absaugstutzens sollte eine Breite haben, die mindestens der des Absaugkanals 26 im Inneren des Aufsatzes 17 entspricht. Es empfiehlt sich daher, dem Absaugstutzen 27 einen elliptischen oder ovalen Querschnitt zu verleihen, wobei seine Breite größer ist als seine Höhe (vgl. Fig.

1 und Fig. 4). Es tritt so über die volle Länge der Absaugleitung keinerlei Verengung des Strömungsquerschnitts auf, und durch die mittige Lage des Absaugkanals 26 wird ein kurzer Strömungsweg erzielt. Der Strömungswiderstand ist entsprechend gering und die Staubabsaugung höchst effektiv. Außerdem ergibt sich durch den elliptischen Querschnitt des Absaugstutzens mehr Platz für die den Stabmotor untergreifende Hand des Benutzers.

Wie man Fig. 4 entnimmt, ist die Fußplatte 10 im Bereich des Absaugkanals 26 nach unten hin offen. Der Absaugkanal 26 wird von dem Laufschuh 11 abgedeckt, der mit Montageschrauben 28 an der Fußplatte 10 verschraubt wird (vgl. Fig. 5). Der Laufschuh 11 kann in einfacher Weise abgenommen werden, um den Absaugkanal 26 zu reinigen, was gelegentlich erforderlich sein kann. Der zweiteilige Aufbau des Sägetisches 1 bietet weiterhin die Möglichkeit, den aus Kunststoff bestehenden Laufschuh 11 bei Verschleiß zu wechseln. Fußplatte 10 und Laufschuh 11 stehen in flächiger Anlage, wodurch normalerweise eine ausreichende Abdichtung des Absaugkanals 26 gewährleistet ist. Wie bereits erwähnt, kann aber gegebenenfalls auch eine elastische Zwischenlage zwischen Fußplatte 10 und Laufschuh 11 eingebracht werden, wodurch zugleich die Abdichtung des Absaugkanals 26 und die elastischen Eigenschaften des Sägetisches 1 verbessert werden.

Der Kopf der Klemmschraube 22, die den Motorkopf 2 in Winkelstellungen arretiert, liegt bei der erfindungsgemäßen Anordnung im Inneren des Absaugkanals 26. Das Langloch 62, durch das der Schaft der Klemmschraube 22 ragt, wird von dem Klemmbacken 22 und/oder dem Sockel des Motorkopfes 2 abgedeckt, so daß insofern keine Falschluft in den Absaugkanal 26 eintritt. Die Öffnung 25, durch die die Klemmschraube 22 von der Unterseite des Sägetisches 1 her zugänglich ist, wird erfindungsgemäß mit einem Schieber 29 verschlossen. Der Schieber 29 ist in Fig. 4 in seiner Offenstellung und in Fig. 5 in seiner Schließstellung dargestellt.

Der Schieber 29 besteht aus einer flachen Platte 30, von der ein Betätigungsknopf 31 nach unten absteht. Die Schieberplatte 30 ist an der Fußplatte 10 in Längsrichtung beweglich geführt. Hierzu dienen Nuten 32, die beidseits am Rand des Absaugkanals 26 ausgenommen sind und eine stufenförmige Erweiterung des Absaugkanals 26 bilden. Die Schieberplatte 30 ist in diese Nuten 32 eingelegt, wobei sie unter die Oberfläche der Fußplatte 10 versenkt zu liegen kommt. Die Erstreckung der Nuten 32 in Längsrichtung des Sägetisches 1 ist größer als die Länge der Schieberplatte 30, so daß sich letztere in den Nuten 32 verschieben läßt. Bei montiertem Laufschuh 11 (vgl. Fig. 5) ist die Schieberplatte 30 unverlierbar zwischen der Fußplatte 10 und dem Laufschuh 11 aufgenommen. Der Laufschuh 11 überdeckt den größten Teil des Absaugkanals 26 einschließlich der Nuten 32. Der Schieber 29 befindet sich als loses Einlegeteil zwischen dem Laufschuh 11 und der Fußplatte 10, wobei er in den Nuten 32 verschiebbar ist. Der Laufschuh 11 weist seinerseits eine Aussparung 33 auf, die mit der Öffnung 25 in der Fußplatte 10 fluchtet, aber in Länge und Breite kleiner ist als die Schieberplatte 30. Die Aussparung 33 ist in einer Endstellung des Schiebers 29 offen, so daß der Kopf der Klemmschraube 22 zugänglich ist, und in der anderen Endstellung (vgl. Fig. 5) vollständig geschlossen. Die Endstellungen können durch ein Anschlagen der Schieberplatte 30 an das Ende der Nuten 32 definiert sein. Es ist aber auch möglich, den Betätigungsknopf 31 etwas vom Rand der Schieberplatte 30 abzusetzen und gegen die Kanten 34 der Aussparung 33 laufen zu lassen, die so als Anschlag dienen. Wie man in Fig. 6 erkennt, ist die Höhe des Betätigungsknopfes kleiner als die Dicke des Laufschuhs 11. Der Schieber 29 liegt also vollständig unter die Laufsohle 6 des Sägetisches 1 versenkt.

Das Sägeblatt 5 der erfindungsgemäßen Stichsäge ist zur Erzielung eines geraden Schnitts mehrfach seitlich abgestützt und stabilisiert. In Fig. 1 und Fig. 2 erkennt man zunächst eine Führungsbzw. Andrückrolle 35, die sich gegen den Rücken des Sägeblattes 5 abstützt. Das Sägeblatt 5 ist in Fig. 2 der Deutlichkeit halber nicht dargestellt. Die Andrückrolle 35 ist im Abstand oberhalb des Sägetischs 1 angeordnet. Sie wird von Trägern 36 gehaltert, die mit dem Motorkopf 2 verbunden sind. Die Träger 36 können insbesondere gelenkig an dem Motorkopf 2 befestigt sein und unter der Kraft einer Druckfeder stehen, die die Andrückrolle 35 gegen das Sägeblatt 5 spannt (nicht dargestellt). Die Führungs- bzw. Andrückrolle 35 selbst ist zwischen den Trägern 36 drehbar gelagert. Sie weist in mittiger Anordnung eine Ringnut 37 auf, deren Breite der Dicke des Sägeblatts 5 zuzüglich einem geringem Laufspiel entspricht. Der Rücken des Sägeblattes 5 greift in diese Ringnut 37 ein, so daß das Sägeblatt 5 zwischen den Nutflanken seitlich stabilisiert wird. Wie keiner näheren Erläuterung bedarf, führt die Andrückrolle 35 entsprechend der Auf- und Abbewegung des Sägeblattes 5 eine abgeleitete Drehbewegung aus, und ihre Halterung ist gegebenenfalls darauf ausgelegt, einem Pendelhub des Sägeblattes 5 zu folgen. Die Andrückrolle 35 hat in erster Linie die Funktion eines Widerlagers, das einem Ausweichen des Sägeblatts 5 nach hinten und seitlich beim Anschnitt entgegenwirkt. Die seitliche Stabilisierungswirkung der Führungs- bzw. Andrückrolle 35 befriedigt aber durch ihre Anordnung oberhalb von der Laufsohle 6 des Sägetsches 1 nicht voll.

Die Erfindung sieht eine zusätzliche seitliche Führung des Sägeblattes 5 auf der Höhe des Sägetisches 1 unmittelbar oberhalb der Laufsohle 6 vor. Gemäß Fig. 4 bis 6 dienen hierzu zwei Stabilisierungselemente 38, die beidseits gegen die Flanken des Sägeblattes 5 wirken. Die Stabilisierungselemente 38 sind Klötze aus einem thermisch hochbelastbaren Material, insbesondere Oxidkeramik wie z.B. Aluminium-Oxidkeramik. Diese Klötze können auf verschiedenste Art und Weise gegen das Sägeblatt 5 angestellt sein, um so das Verbiegen des Sägeblattes an der Austrittsseite des Schnitts zu verhindern und die seitliche Ausweichbewegung des Sägeblattes 5 zu begrenzen.

In dem Ausführungsbeispiel gemäß Fig. 4 bis 6 sind die Stabilisierungselemente 38 mit der Fußplatte 10 des Sägetisches 1 verschraubt. An die Fußplatte 10 ist einstückig ein Steg 39 angeformt, der sich quer zu der Längsrichtung der Fußplatte 10 erstreckt und die Ausnehmung 14 überspannt, in der das Sägeblatt 5 läuft. Der Steg 39 kommt dabei hinter dem Rücken des Sägeblattes 5 zu liegen. Er besitzt einen abgerundet-rechteckigen Querschnitt und ist mit zwei Gewindebohrungen 40 versehen, die sich in symmetrischer Anordnung beidseits von der Längsmittelebene der Fußplatte 10 befinden und senkrecht zu der Sägetischebene gerichtet sind. Die Gewindebohrungen 40 dienen zur Befestigung je eines Stabilisierungselementes 38. Die Stabilisierungselemente haben einen im wesentlichen rechteckigen Grundriß (vgl. Fig. 5). Sie sind jeweils an der einander zugewandten Innenfläche gekerbt, so daß ein Laufspalt 41 für das Sägeblatt 5 gebildet wird. Die Tiefe dieses Laufspaltes 41 ist vorzugsweise so gewählt, daß die Stabilisierungselemente 38 seitlich gegen den nicht verzahnten Teil des Sägeblattes 5 arbeiten, d.h. die Schneiden des Sägeblattes 5 nicht berühren.

In seitlicher Ansicht (Fig. 6) haben die Stabilisierungselemente 38 ein U-Profil. Sie passen mit der U-Öffnung 42 auf den Steg 39, an dem sie von der Unterseite des Sägetisches 1 her verschraubt werden. Dabei besteht eine Verstellmöglichkeit in der Sägetischebene quer zu der Schnittrichtung des Sägeblattes 5. Die Stabilisierungselemente 38 sind mit entsprechenden Langlöchern 43 versehen, durch die der Schaft ihrer Montageschrauben 44 hindurchgreift. Sie lassen sich in dem Langlochspiel auf dem Steg 39 seitlich justieren, wodurch ein Toleranzausgleich und ein Ausgleich verschiedenen Sägeblattdicken möglich ist und das Spiel des Sägeblattes 5 zwischen den Stabilisierungselementen 38 eingestellt werden kann.

Der Laufschuh 11 ist im Bereich der Stabilisierungselemente 38 in einer Form ausgeschnitten, die der Ausnehmung 14 in der Fußplatte 10 entspricht. Die Stabilisierungselemente 38 sind daher von der Unterseite des Sägetisches 1 auch bei aufgeschraubtem Laufschuh 11 zugänglich. Pfeil 45 in Fig. 6 deutet an, wie die Stabilisierungselemente 38 auf den Steg 39 aufgesetzt werden. Man erkennt, daß die montierten Stabilisierungselemente über die Grundfläche der Fußplatte 10 hinausstehen, aber in dem Laufschuh 11 versenkt zu liegen kommen. Es ist so ein minimaler Abstand zwischen der Laufsohle 6 und der Unterkante 46 der Stabilisierungselemente 38 gewährleistet.

Den Stabilisierungselementen 38 ist erfindungsgemäß ein Splitterschutz bzw. Spänefang 47 vorgeordnet, in dem die Schneiden des Sägeblattes 5 laufen. Der Spänefang 47 besteht aus einem weichen Material, insbesondere Kunststoff, in das sich das Sägeblatt 5 zur Erstellung eines Laufspalts freischneidet. Zu diesem Zweck muß der Splitterschutz z.B. mit dem Daumen in das laufende Sägeblatt gedrückt werden. Der Spänefang 47 wird von der Fußplatte 10 des Sägetisches 1 gehaltert. Er überspannt die Ausnehmung 14, in der das Sägeblatt 5 läuft, und ist in Längsrichtung des Sägetisches 1 verstellbar. Zur Führung des Spänefangs 47 dienen zwei Rippen 48, die einstückig an die Fußplatte 10 angeformt sind und einander gegenüberliegend seitlich in die Ausnehmung 14 ragen. Die Anordnung der Rippen 48 ergibt sich im einzelnen aus Fig. 2, 4 und 6. Die Rippen 48 haben demnach einen im wesentlichen rechteckigen Querschnitt. Sie setzen mit einer das Aufziehen des Spänefangs 47 erleichternden, sich auf das Sägeblatt 5 hin verengenden Schräge 49 an der vorderen Schmalseite 13 der Fußplatte 10 an, und sie erstrecken sich parallel zu der Sägetischebene bis dicht vor den Steg 39.

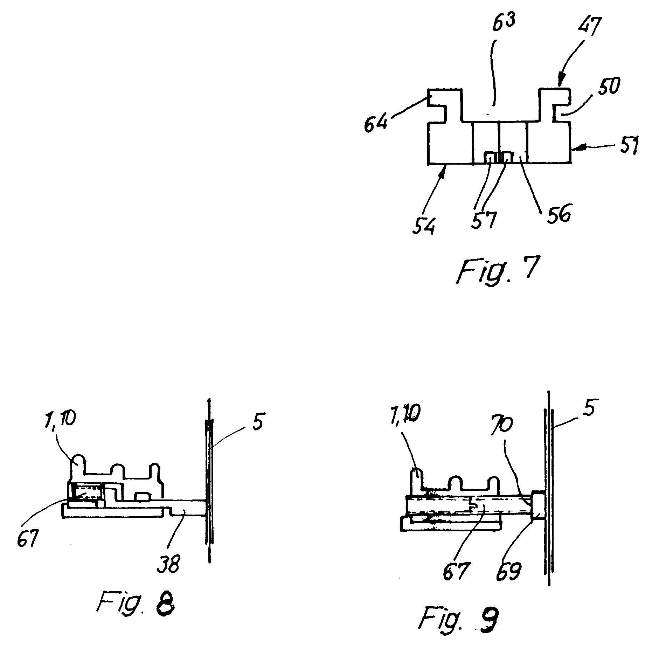

Die Rippen 48 greifen in komplementäre Führungsnuten 50 an den beiden Seitenwänden 51 des Spänefangs 47 ein (vgl. Fig. 6 und Fig. 7). Der Spänefang 47 läßt sich auf den Rippen 48 bis in eine Anlagestellung mit den Stabilisierungselementen 38 verschieben, wobei das Sägeblatt 5 einen Laufspalt in den Spänefang 47 sägt. Die Aufschubrichtung des Spänefangs 47 wird in Fig. 6 durch den Pfeil 52 verdeutlicht. Die Abbildung läßt erkennen, daß der Spänefang 47 im montierten Zustand über die Grundfläche 53 der Fußplatte 10 hinaussteht, aber in dem Laufschuh 11 versenkt zu liegen kommt, so daß seine Unterseite 54 bündig mit der Laufsohle 6 abschließt bzw. in sehr geringem Abstand oberhalb von der Laufsohle 6 zu liegen kommt. In dieser Anordnung verhindert der weiche Werkstoff des Spänefangs 47 das Absplittern von Teilen des Schnittguts an der Austrittsstelle des Sägeblattes 5, wodurch ein sehr sauberer Schnitt erzielt wird und ein minimaler Spanabfall auftritt.

Eine Beherrschung des Spanflugs ist in hohem Maße wünschenswert, damit ein geringes Spiel zwischen den Stabilisierungselementen 38 und dem Sägeblatt 5 eingestellt werden kann. Es muß möglichst verhindert werden, daß Späne zwischen das Sägeblatt 5 und die Stabilisierungselemente 38 gelangen, wo sie den Lauf des Sägeblattes bremsen und zu einem erhöhten Verschleiß führen können. Hierzu tragen das Profil des Spänefangs 47 und die effektive Staubabsaugung gemäß der Erfindung gleichermaßen bei. Gemäß Fig. 5 bis 7, ist an der Vorderkante 55 des Splitterschutzes bzw. Spänefangs 47 in mittiger Anordnung ein dreieckiger Ausschnitt 56 vorgesehen, dessen Spitze zu dem Sägeblatt 5 hin weist und als Schnittanzeige bzw. als Anzeige für die Lage des Sägeblattes beim Sägen dient, indem er es erleichtert, die Stichsäge präzise an einem Anriß entlangzuführen. Vor der Spitze des Ausschnittes 56 gehen zwei Spanableitrinnen 57 ab, die an der Unterseite 54 des Spänefangs 47 ausgenommen sind (vgl. Fig. 5 und Fig. 7). Die Spanableitrinnen 57 führen an die Hinterkante 58 des Spänefangs 47, wobei sie in einer Dreieckskonfiguration auseinanderlaufen und am seitlichen Rand des Spänefangs 47 enden. Die schon an sich geringe, an der Unterseite des Sägetisches 1 anfallende Spanmenge wird so seitlich von den Stabilisierungselementen 38 weggeführt. Die Stabilisierungselemente 38 sind so dimensioniert, daß sie weder die volle Breite, noch die volle Tiefe der Ausnehmung 14 in dem Sägetisch 1 einnehmen. Seitlich neben den Stabilisierungselementen 38 bestehen daher Spalte 59 und am Rücken der Stabilisierungselemente 38 ein weiterer Spalt 60, durch die der Saugstrom der Staubabsaugeinrichtung an die Unterseite des Sägetisches 1 treten kann. Die dort anfallende Spanmenge wird so in effektiver Weise abgeführt.

Fig. 6 läßt deutlich die Vorderkante 19 des Aufsatzes 17 und die Mündung 61 des Absaugkanals 26 erkennen. Des weiteren ist das Langloch 62 ausgewiesen, in dem die zur Winkelverstellung des Motorkopfes 2 dienende Klemmschraube 22 läuft. In dem beschriebenen Ausführungsbeispiel sind die Stabilisierungselemente 38 fest mit dem Sägetisch 1 verbunden und nur in der Sägetischebene verstellbar. Es ist daher klar, daß die Stabilisierungselemente eine Schwenkbewegung des Motorkopfes 2 nicht mitmachen, so daß sie nur bei einem senkrechten Sägeschnitt Verwendung finden können. Es ist aber auch eine Abwandlung denkbar, in der die Stabilisierungselemente 38 an den einander zugewandten Enden zugespitzt sind, wobei zwischen den einander zugewandten Spitzen das Sägeblatt geschwenkt werden kann.

Gemäß Fig. 7 ist die Materialstärke des Spänefangs 47 im Arbeitsbereich des Sägeblattes 5 durch eine Einsenkung 63 verringert. Die Führung in dem Sägetisch 1 erfolgt an seitlichen Laschen 64, die sich beidseits von der Einsenkung 63 erstrecken und in denen die Führungsnuten 50 ausgenommen sind. Diese Anordnung dient in erster Linie dazu, den Spänefang 47 in der erforderlichen Tiefe gegenüber der Fußplatte 10 abzusenken, so daß er annähernd bündig mit der Laufsohle 6 abschließt.

Allgemein wird eine Anordnung bevorzugt, bei der die Stabilisierungselemente 38 quer zu der Sägeblattebene verstellbar und festlegbar sind, wobei die Führung der Stabilisierungselemente 38 an dem Sägetisch 1 (vgl. Fig. 4 bis 6) erfolgt.

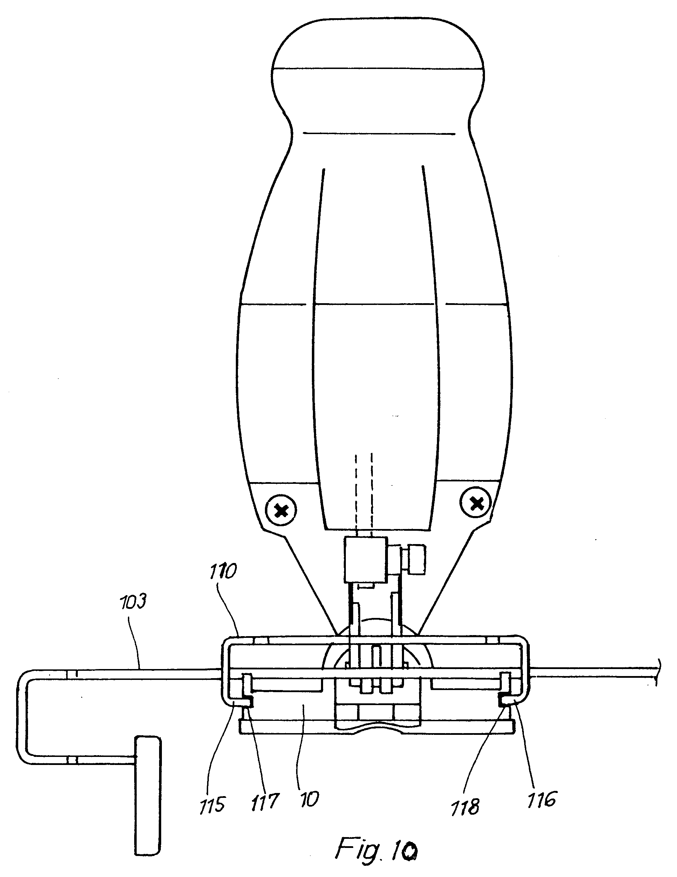

Fig. 8 und Fig. 9 zeigen weitere Ausführungsbeispiele für die seitlich gegen das Sägeblatt 5 arbeitenden Stabilisierungselemente 38. Diese haben gemäß Fig. 8 die Form eines Keramikschiebers, der in dem Sägetisch 1 quer zu der Sägeblattebene verschiebbar gelagert ist. Die Schieber werden von Stellschrauben 67 beaufschlagt und so gegen das Sägeblatt 5 angestellt. Gemäß Fig. 9 dient als Stabilisierungselement ein Keramikplättchen 69, das unlösbar starr mit der vorderen Stirnfläche 70 einer Stellschraube 67 verbunden, und insbesondere auf diese Stirnfläche aufgeklebt ist. Auch hier kann durch Drehen der Stellschraube 67 der Abstand zwischen dem Stabilisierungselement und dem Sägeblatt eingestellt werden.

Durch die Stabilisierung des Sägeblattes 5 unmittelbar oberhalb der Laufsohle 6 wird der Geradschnitt einer Stichsäge wesentlich verbessert. Dieses Ergebnis läßt sich durch die Verwendung eines dickeren Sägeblatts weiter fördern. Während übliche Stichsägeblätter eine Dicke von maximal 1,35 mm haben, sieht die Erfindung eine Verwendung von Sägeblättern 5 mit mehr als 1,35 mm und bis zu 2 mm Dicke vor, wobei ein bevorzugter Wert bei 1,75 mm liegt. Durch die Erhöhung der Dicke auf 1,75 mm steigt die Biegesteifigkeit des Sägeblattes 5 um 118 % an, und die Schnittgenauigkeit der Säge wird entsprechend verbessert. Zwar läßt die Schnittleistung wegen des größeren Zerspanungsvolumens etwas nach, doch ist diese Minderung der Schnittleistung nur unwesentlich.

Als weitere Maßnahme zur Verbesserung des Geradschnitts sieht die Erfindung die Verwendung einer Führungsplatte vor, die sich auf das zu zersägende Werkstück auflegen läßt und den Verlauf des Sägeschnitts bestimmt. Eine derartige Führungsplatte 71 ist in Fig. 2 dargestellt. Sie besteht aus einem ebenen Auflageteil 72, an dem eine nach oben abstehende Schiene 73 mit parallelen Führungsflächen 74, 75 ausgeformt ist. Die Führungsplatte 71 kann beispielsweise aus Blech bestehen, und die Schiene 73 kann als Sicke durch Prägen hergestellt sein (nicht dargestellt). Es ist aber auch möglich, die Führungsplatte 71 als Strangpreßteil z.B. aus Leichtmetall zu fertigen, wobei man der Schiene 73 ein im Querschnitt rechteckiges, nach unten hin offenes Hohlprofil verleihen kann. Auch andere Ausführungsformen sind ohne weiteres denkbar. Es empfiehlt sich, an der Unterseite der Führungsplatte 71 einen rutschfesten Belag 89 insbesondere aus Kunststoff vorzusehen, so daß die Führungsplatte 71 selbsthemmend auf dem zu zersägenden Werkstück haftet.

Die Verbindung zwischen dem Sägetisch 1 und der Führungsplatte 71 wird gemäß Fig. 2 und 3 mit einem Zwischenstück 76 hergestellt. Das Zwischenstück 76 ist der Grundform nach ein L-Profil. Sein langer L-Schenkel 77 wird an dem Sägetisch 1 festgelegt, was z.B. durch Exzenterklemmung erfolgen kann. Man erkennt einen Knebel 78, der drehbar in dem langen L-Schenkel 77 gelagert und mit einem Exzenter 79 verbunden ist. Der Exzenter 79 arbeitet gegen ein Widerlager in dem Sägetisch 1, so daß der L-Schenkel 77 durch Drehung an dem Knebel 78 gegen den Sägetisch 1 geklemmt wird. Der Sägetisch 1 ist beidseits des Aufsatzes 17 mit Befestigungspunkten für das Zwischenstück 76 versehen, so daß dieses wahlweise auf beiden Seiten der Stichsäge montiert werden kann. Das Zwischenstück 76 kragt seitlich von dem Sägetisch 1 aus, wobei der lange L-Schenkel 77 in einem solchen Abstand von der Laufsohle 6 zu liegen kommt, daß er die Schiene 73 übergreift. Um ein Verdrehen des Zwischenstücks 76 um den Exzenter 79 zu verhindern, sind am Zwischenstück noch zwei Stifte 79a, 79b vorgesehen, die in die Bohrungen 80a und 80b bzw. 81a und 81b eingesteckt werden können.

Der kurze L-Schenkel 80 ist nach unten abgewinkelt. Er kommt mit der einen Führungsfläche 75 der Schiene 73 zur Anlage. Die gegenüberliegende Führungsfläche 74 wird von zwei Stellgliedern 81 beaufschlagt, die in Längsrichtung versetzt an dem langen L-Schenkel 77 angebracht sind. Mit den Stellgliedern 81 wird eine Zweipunktführung des Zwischenstücks 76 auf der Schiene 73 erzielt, wobei das Führungsspiel eingestellt werden kann.

Die Stellglieder 81 bestehen jeweils aus einem geschlitzten Kunststoffkörper 82, der mit Montageschrauben 83 an dem langen L-Schenkel 77 befestigt ist. Der Schlitz in dem Kunststoffkörper 82 ist bei 84 ausgewiesen. Er erstreckt sich in Längsrichtung der Schiene 73 und teilt in dem Kunststoffkörper 82 eine Wange 85 ab, die auf Grund ihrer Dicke elastisch deformierbar ist. Die Wange 85 wird von einer Stellschraube 86 beaufschlagt, die in einer Gewindebohrung des Kunststoffkörpers 82 aufgenommen ist, den Schlitz 84 durchsetzt und sich quer zu der Längsrichtung der Schiene 73 vorschraubt. Die Stellschraube 86 drückt die Wange 85 gegen die Führungsfläche 74 der Schiene 73. Der Rücken der Wange 85, gegen den die Stellschraube 86 arbeitet, kann dabei in nicht näher dargestellter Weise mit einem vorzugsweise federnden Metallbügel hinterlegt sein.

Durch Deformation der Wange 85 wird das Laufspiel des Zwischenstücks 76 auf der Schiene 73 eingestellt. Der lange L-Schenkel 77 des Zwischenstücks 76 ist jeweils im Bereich der Wange 85 aufgebrochen, und die Wangen 85 ragen mit einem Fortsatz 87 in die entsprechende Spalte 88 hinein. Hierdurch ist die Auslenkung der Wangen 85 anschlagbegrenzt, und es ist eine einfache visuelle Kontrolle der jeweiligen Einstellung möglich. Insbesondere können so die beiden Anlagepunkte des Stellglieds 81 in vorteilhafter Weise gegeneinander abgeglichen werden.

Die Exzenterklemmung des Zwischenstücks 76 erfolgt in Längsrichtung gesehen zwischen den beiden Stellgliedern 81. Der lange L-Schenkel 77 kann in diesem Bereich verschmalert sein, wie dies in Fig. 3 dargestellt ist.

Der kombinierte Einsatz dreier Maßnahmen, nämlich
- einer spielarmen Stabilisierung des Sägeblatts auf der Höhe der Laufsohle,
- der Verwendung eines dickeren Sägeblatts und
- der Verwendung einer Führungsplatte

bringt eine sichere Beherrschung des geführten Geradschnittes bei einer Stichsäge mit sich. Wie dargelegt, muß dabei für eine wirksame Stabilisierung des Sägeblattes 5 der Spanflug kontrolliert werden, was durch den Spänefang 47 und die verbesserte Form der Staubabsaugung geschieht. Im Ergebnis ist es möglich, in einer 19 mm dicken Spanplatte einen 1 m langen Schnitt auszuführen, der in der Geradhaltig- und Winkeligkeit eine Abweichung von weniger als 0,2 mm aufweist.

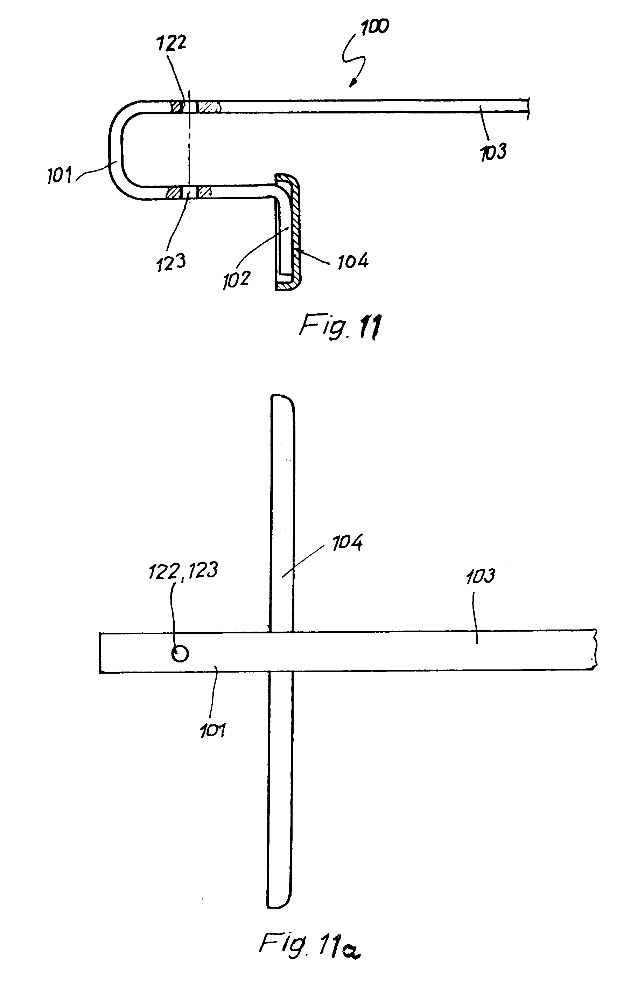

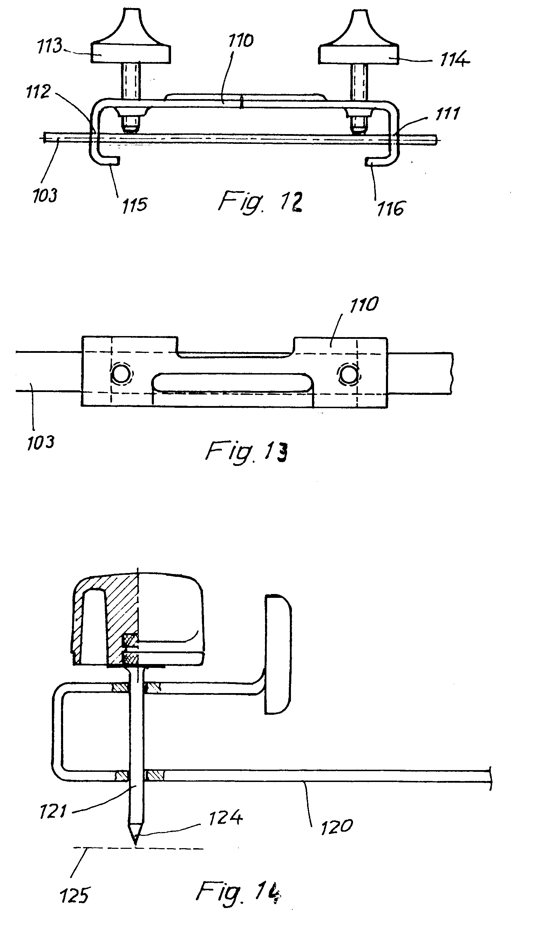

Gemäß weiterer Erfindung ist bei einer Variante der neuen Stichsäge noch ein Parallelanschlag zugeordnet, der in Fig. 10 bis 14 dargestellt ist. Dieser Anschlag besteht aus dem Anschlagkörper 100, dessen einer Endbereich eine U-förmige Abbiegung 101 besitzt, deren freies Ende 102 etwa rechtwinkelig zur Längsachse des Halterungsteils 103 und von diesem nach außen abgebogen ist. Dieses abgebogene freie Ende 102 trägt die Anschlagleiste 104. Der Anschlagkörper 100 ist an der Stichsäge abnehmbar befestigt, indem der Halterungsteil 103 durch die Bohrungen 111 und 112 des Bügels 110 hindurchgesteckt und an diesem mit Hilfe der Drehknöpfe 113, 114 in seiner jeweiligen Lage festgestellt wird. Die nach innen gekröpften Enden 115, 116 des Bügels 110 greifen in Nuten 117, 118 an der Fußplatte 10 ein. Auf diese Weise erhält man einen leicht justierbaren und leicht anbring- und abnehmbaren Parallelanschlag, der einfach im Aufbau ist und in vielfältiger Weise angewendet werden kann. Bekannte vergleichbare Konstruktionen hingegen sind aufwendig und bedingen einen relativ komplizierten Aufbau, außerdem sind sie nicht so vielseitig anwendbar. Außerdem kann man den obigen Anschlag in Verbindung mit der Zentrierspitze 120 als sogenannter Kreisschneider verwenden. Zu diesem Zweck muß der Anschlag nach Herausnehmen aus einer Halterung um 180° gedreht werden, derart, daß die Anschlagleiste 104 nicht mehr nach unten, vom Sägetisch 1 weg, weist, wie das bei der Anwendung als Parallelanschlag der Fall ist, sondern nach oben zum Sägetisch 1 und zum Gehäuse hin gerichtet ist, woraufhin der Stift 121 der Zentrierspitze 120 durch die Löcher 122, 123 des Anschlagkörpers im Bereich 101 hindurchgesteckt wird, um mit ihrem unteren zugespitzten Ende 124 auf der Unterlage 125 aufzuliegen und in diese einzudringen, wie in Fig. 14 angedeutet ist, und es auf diese Weise möglich zu machen, daß mit dem Werkzeug um den Mittelpunkt 124-125 eine Kreisbogen- bzw. Kreisbahn beschrieben und demzufolge ein kreisbogenförmiger Schnitt ausgeführt wird.

**Patentansprüche**

1.  Stichsäge mit einem Antriebsaggregat (3), das einen Sägeblatthalter (4) treibt, an dem ein Sägeblatt (5) befestigbar ist, und mit Führungsmitteln zum Führen des Sägenkörpers gegenüber der Werkstückoberfläche, sowie mit einem das Antriebsaggregat (3) tragenden Sägetisch (1), der an seiner Unterseite einen auf dem zu bearbeitenden Werkstück mit einer Laufsohle (6) auflegbaren Laufschuh (11) enthält, dadurch gekennzeichnet, daß zum Bearbeiten von starren Werkstücken wie Holz zusätzlich zu den als Andrück- oder Pendelrollen mit einer Nut, an deren Nutgrund der Sägeblattrücken anliegt, ausgebildeten Führungsmitteln als Klötze oder Plättchen ausgebildete Stabilisierungselemente (38) vorgesehen sind, die am Sägetisch (1) quer zur Sägerichtung verstellbar und festsetzbar lösbar angebracht sind und hierbei am Sägeblatt (5) von einander entgegengesetzten Seiten flach anliegen und es hierbei unmittelbar oberhalb seiner Laufsohle (6) seitlich so führen, daß das Sägeblatt (5) gegenüber dem Sägetisch (1) quer zur Vorschubrichtung keine Bewegung ausführen kann, um es so am "Verlaufen" zu hindern und vor Verkanten und Verbiegen zu schützen.

2.  Stichsäge nach Anspruch 1, dadurch gekennzeichnet, daß die z.B. aus einem thermisch hoch belastbaren Material, insbesondere Oxidkeramik, z.B. Aluminium-Oxidkeramik bestehenden Stabilisierungselemente (38) jeweils seitlich an dem nicht verzahnten Teil des Sägeblattes (5) anliegen.

3.  Stichsäge nach Anspruch 1 oder 2, dadurch gekennzeichnet, daß die Stabilisierungselemente (38) in einer Langlochführung (43) an dem Sägetisch (1) befestigt sind.

**4.** Stichsäge nach einem der Ansprüche 1 bis 3, dadurch gekennzeichnet, daß die Schneiden des Sägeblattes (5) auf der Höhe des Sägetisches (1) in einen den Stabilisierungselementen (38) in Vorschubrichtung vorgeordneten Splitterschutz bzw. Spänefang (47) laufen, der zweckmäßigerweise vor den Schneiden des Sägeblattes (5) an dem Sägetisch (1) in Schnittrichtung verschiebbar geführt ist und der insbesondere aus einem weichen Material, insbesondere Kunststoff, besteht, wobei sich das Sägeblatt zur Erstellung eines Laufspaltes in den Spänefang (47) einschneiden kann.

**5.** Stichsäge nach Anspruch 4, dadurch gekennzeichnet, daß der Splitterschutz bzw. Spänefang (47) einen zum Ableiten der Späne dienenden dreieckförmigen Spanteiler enthält, wobei die Späne beim Vorschub der Stichsäge durch an der Unterseite des Spanteilers vorgesehene Spanableitrinnen (57) seitlich abgelenkt werden.

**6.** Stichsäge nach einem der Ansprüche 1 bis 5, dadurch gekennzeichnet, daß mit dem Sägetisch (1) z.B. durch Exzenterklemmung ein seitlich ausladendes Zwischenstück (76) verbindbar ist, das an einer Führungsplatte (71) läuft, die an ihren Langseiten mit nach oben abstehenden Randstegen (73, 90) versehen ist, zwischen die der Sägetisch (1) paßt, und einen Durchgriffsspalt (92) aufweist, durch den das Sägeblatt (5) ragt.

**7.** Stichsäge nach einem der Ansprüche 1 bis 6, dadurch gekennzeichnet, daß der Sägetisch (1) eine den hohlprofilförmigen Aufsatz (17) tragende und insbesondere aus Metall, beispielsweise Leichtmetall wie Aluminium-Druckgußmaterial oder Aluminiumprofil, bestehende Fußplatte (10) enthält, an deren Unterseite der Laufschuh (11) lösbar angesetzt ist, der zweckmäßigerweise aus Kunststoff aufgebaut ist und allseits über den Rand der Fußplatte (10) hinaussteht, wobei der Aufsatz (17) vorzugsweise einstückig an die Fußplatte (10) angeformt ist, z.B. in einem Gießverfahren, und wobei zwischen der Fußplatte (10) und dem Laufschuh (11) eine z.B. klemmend befestigte, elastische Zwischenlage, insbesondere aus Gummi, angebracht sein kann.

**8.** Stichsäge nach einem der Ansprüche 1 bis 7, dadurch gekennzeichnet, daß an der Fußplatte (10) mittels eines an dieser angreifenden Bügels (110), in Richtung auf die Fußplatte (10) zu und von dieser weg in Längsrichtung verstellbar, ein Parallelanschlag lösbar und abnehmbar angebracht ist, wobei der Bügel (110) zweckmäßigerweise die Gestalt eines C hat, dessen abgebogene freien Enden (115, 116) von außen her in Nuten (117, 118) an den Längsaußenseiten der Fußplatte (10) angreifen und dessen Schenkel koaxiale Bohrungen aufweisen können, durch die hindurch die stabförmige Anschlaghalterung oberhalb der Fußplatte (10) verlaufend verstellbar und feststellbar und abnehmbar gesteckt werden kann, welche Anschlaghalterung an ihrem einen Endbereich zweckmäßigerweise U-förmig gebogen ist, wobei das freie Ende des U abgebogen ist und die Anschlagleiste (104) trägt und die im Bereich der Schenkel des U-förmig gebogenen Endes zwei koaxiale, übereinanderliegende Löcher aufweisen kann, durch die hindurch der Stift (121) einer Zentrierspitze (120) steckbar ist.

**9.** Stichsäge nach einem der Ansprüche 1 bis 8, dadurch gekennzeichnet, daß der Absaugstutzen (27) einstückig an den Aufsatz (17) angeformt ist und einen elliptischen oder ovalen Querschnitt hat und breiter ist als hoch.

**10.** Stichsäge mit einem Motorkopf (2) mit einem Antriebsaggregat (3) nach einem der Ansprüche 7 bis 9, dadurch gekennzeichnet, daß der hohlprofilförmige Aufsatz (17) eine nach oben gewölbte, als Mantelabschnitt eines Kreiszylinders konstruierte Oberseite (20) besitzt, die als Führungsfläche für den schwenkbar auf sie aufsetzbaren Motorkopf (2) dient, der zweckmäßigerweise mittels einer Klemmschraube (22) an dem Aufsatz (17) in Winkelstellungen arretierbar ist, wobei der Sägetisch (1) eine zweckmäßigerweise mit einem Schieber (29) verschließbare Öffnung (25) aufweisen kann, durch die der Kopf der Klemmschraube (22) zugänglich ist, welcher Schieber (29) unverlierbar zwischen der Fußplatte (10) und dem Laufschuh (11) eingelegt und an der Fußplatte (10) und/oder dem Laufschuh (11) geführt sein kann.

**Claims**

**1.** A jig saw with a drive assembly (3) driving a saw blade holder (4) to which a saw blade (5) can be attached, with guidance means for guiding the saw body relative to the workpiece surface, and with a saw table (1) supporting the drive assembly (3), its underside comprising a shoe (11) for placing on the workpiece to be machined by means of a base plate (6), characterised in that, for the machining of rigid workpieces such as wood, there are provided, in addition to the guidance means formed by contact or pendulum rollers with a groove the base of which contacts the saw blade, stablising elements (38) in the form of blocks or lamina fitted to the saw table (1) so as to be adjustable at right angles to the direction of sawing and to be lockable and detachable, said elements being in flat contact with the saw blade (5) from opposite sides and laterally guiding it immediately above the base plate (6), thereby preventing any movement of the saw blade (5) relative to the saw table (6) to avoid "wandering" and to protect the saw blade against tilting and bending.

2. A jig saw according to Claim 1, characterised in that the stabilising elements (38), which are made of a highly thermally stable material, in particular of oxide ceramics, e.g. aluminium oxide ceramics, laterally contact the non-serrated part of the saw blade (5).

3. A jig saw according to Claim 1 or 2, characterised in that the stabllising elements (38) are secured to the saw table (1) in a slot guide (43)

4. A jig saw according to any of Claims 1 to 3, characterised in that the cutting edges of the saw blade (3) enter a splinter guard or chip tray (47) arranged in front of the stabilising elements (38) in the direction of feed at the level of the saw table (1), said splinter guard or chip tray being suitably guided for movement in the direction of cut in front of the cutting edges of the saw blade (5) on the saw table (1) and being in particular made of a soft material such as plastics, the saw blade being capable of cutting into the chip tray (47) to provide an aperture.

5. A jig saw according to Claim 4, characterised in that the splinter guard or chip tray (47) is provided with a triangular chip divider for diverting the chips, which are laterally diverted through chip chutes (57) on the underside of the chip divider while the compass saw advances.

6. A jig saw according to any of Claims 1 to 5, characterised in that the saw table (1) can be fitted with a laterally projecting connecting piece (76), for instance by eccentric clamping, said connecting piece running on a guide plate (71) the longer sides of which are provided with edge webs (73, 90) containing the saw table (1) and which has a passage (92) for the saw blade (5).

7. A jig saw according to any of Claims 1 to 6, characterised in that the saw table has a foot plate (10) made, in particular, of metal, such as an alloy like aluminium die-cast material or aluminium sections, and supporting a hollow-section top piece (10), to the underside of which the shoe (11), which is suitably made of plastics and projects beyond the edge of the foot plate (10) on all sides, is detachably secured, the top piece (17) preferably being integral with the foot plate (10), for instance being integrally cast therewith, and provision being made for clamping a flexible interlayer, in particular made of rubber, between the foot plate (10) and the shoe (11).

8. A jig saw according to any of Claims 1 to 7, characterised in that a frame (110) engaging the foot plate (10) carries a detachable parallel stop adjustable longitudinally towards and away from the foot plate (10), said frame (110) suitably being a C-frame, the curved free ends (115, 116) of which engage grooves (117, 118) located on the outside of the longitudinal sides of the foot plate (10) and the legs of which can be provided with coaxial bores through which the rod-shaped stop bracket can be lockably and detachably inserted for adjustment above the foot plate (10), one end section of the stop bracket being suitably U-shaped with the free end of the U being curved and carrying the stop rail (104), two coaxial holes being provided on top of each other in the area of the legs of the U-shaped end for the insertion of the pin (121) of a cetre (120).

9. A jig saw according to any of Claims 1 to 8, characterised in that the suction connection (27) is integral with the top piece (17), having a elliptical cross-section and being wider that it is high.

10. A jig saw with a motor head (2) with a drive assembly according to any of Claims 7 to 9, characterised in that the hollow section top piece (17) has a curved upper side (20) designed as a jacket section of a regular cylinder and serving as a guide surface for the pivotably mounted motor head (2), which is suitably lockable on the top piece (17) in the desired angular position by means of a clamping screw (22), whereby the saw table (1) may be provided with an opening (25) closable by means of a slide (29), said opening providing access to the head of the clamping screw (22), the slide (29) being captive between the foot plate (10) and the shoe (11) and being capable of guidance on the foot plate (10) and/or the shoe (11).

**Revendications**

1. Scie sauteuse, avec un groupe d'entraînement (3), entraînant un support de lame de scie (4), sur lequel on peut fixer une lame de scie (5), et avec des moyens de guidage pour guider le corps de scie par rapport à la surface de la pièce d'ouvrage, ainsi qu'avec une table de sciage (1), portant le groupe d'entraînement (3), qui contient sur sa face inférieure un patin mobile (11) susceptible d'être appliqué, à l'aide d'une semelle mobile (6), sur la pièce d'ouvrage à travailler, caractérisée en ce que pour travailler des pièces d'ouvrage rigides, telles qu'en bois, il est prévu en plus des moyens de guidage réalisé sous forme de galets de pressage ou pendulaire, avec une rainure sur le fond de laquelle appuie de dos de la lame de scie, des éléments de stabilisation (38), réalisés sous forme de blocs ou de plaquettes, montés amovibles sur la table de sciage (1), réglables et blocables transversalement à la direction de sciage, et appuyant en même temps à plat sur la lame de scie (5), par ses faces opposées l'une en face de l'autre, et assurant en même temps un guidage latéral, directement au-dessus de sa semelle mobile (6), de façon que la lame de scie (5) ne puisse pas se déplacer par rapport à la table de sciage (1), transversalement à la direction de progression du sciage, afin d'empecher tout "dérapage" et d'assurer une protection contre le coincement et le pliage.

2. Scie sauteuse selon la revendication 1, caractérisée en ce que les éléments de stabilisation (38), réalisés par exemple en un matériau à résistance élevée à la température, en particulier en céramique oxydée, par exemple en céramique oxydée d'aluminium, appuient, respectivement, latéralement sur la partie non dentée de la lame de scie (5).

3. Scie sauteuse selon la revendication 1 ou 2, caractérisée en ce que les éléments de stabilisation (38) sont fixés dans un guidage à trou allongé (43) situé sur la table de sciage (1).

4. Scie sauteuse selon l'une des revendications 1 à 3, caractérisée en ce que les tranchants de la lame de scie (5) défilent au niveau de la table de sciage (1), dans une protection anti-éclats, respectivement dans un piège à copeaux (47), placé en avant des éléments de stabilisateur (38) dans le sens de progression du sciage, qui est guidé déplaçable de manière appropriée devant les tranchants de la lame de scie (5) sur la table de sciage (1), dans le sens de la coupe et se compose en particulier d'un matériau tendre, en particulier de matière synthétique, la lame de scie pouvant entailler le piège à copeaux (47) pour constituer un interstice de défilement.

5. Scie sauteuse selon la revendication 4, caractérisée en ce que la protection anti-éclats, respectivement le piège à copeaux (47) contient un diviseur de copeaux triangulaire, servant à dévier les copeaux, ces derniers étant déviés latéralement lors de la progression de la lame de scie, dans des goulottes de déviation de copeaux (57) prévues en face inférieure du diviseur de copeaux.

6. Scie sauteuse selon l'une des revendications 1 à 5, caractérisée en ce qu'à la table de sciage (1) est reliable, par exemple par un serrage à excentrique, une pièce intermédiaire (76) à enlèvement par le côté, qui défile sur une plaque de guidage (71) pourvue sur ses faces longitudinales de nervures de bordures (73,90) faisant saillie vers le haut, entre lesquelles s'adapte la table de sciage (1), et qui présente un interstice de pénétration (92) au travers duquel pénètre la lame de scie (5).

7. Scie sauteuse selon l'une des revendications 1 à 6, caractérisée en ce que la table de sciage (1) comprend un socle (10), par exemple en métal léger, tel qu'un matériau moulé sous pression et à base d'aluminium ou un profilé en aluminium, portant une pièce de couverture (17) en forme de profilé creux, socle (10) dont la face inférieure est équipée d'un patin (11) amovible, réalisé avantageusement en matière synthétique et dépassant de tous côtés du bord du socle (10), la pièce (17) étant de préférence formée d'un seul tenant avec le socle (10), par exemple suivant un procédé de moulage, et une garniture intermédiaire élastique, en particulier en caoutchouc, fixée par serrage, pouvant être montée entre le socle (10) et le patin (11).

8. Scie sauteuse selon l'une des revendications 1 à 7, caractérisée en ce que sur le socle (10) est monté, au moyen d'un étrier (110), une butée parallèle, amovible et extractible, réglable en direction longitudinale vis à vis du socle (10), en s'en approchant et en s'éloignant, l'étrier (110) ayant avantageusement la forme d'un C dont les extrémités libres repliées (115,116) viennent en prise dans des rainures (117,118) ménagées sur les faces extérieures longitudinales du socle (10) et dont les ailes peuvent présenter des alésages coaxiaux, à travers lesquels la fixation de butée en forme de tige peut être enfichée, de façon réglable et fixable et extractible, en passant au-dessus du socle (10), fixation de butée qui est de manière appropriée repliée en U à l'une de ses zones d'extrémité, l'extrémité libre du U étant repliée et portant la bande de butée (104), et qui peut présenter, dans la zone des ailes de l'extrémité repliée en U, deux trous superposés coaxiaux à travers lesquels la tige (121) d'une pointe de centrage (120) est enfichable.

9. Scie sauteuse selon l'une des revendications 1 à 8, caractérisée en ce que la tubulure d'aspiration (27) est formée d'un seul tenant sur la pièce (17) et présente une section transversale elliptique ou ovale, en étant plus large que haute.

10. Scie sauteuse avec une tête-moteur (2) comportant un groupe d'entraînement (3), selon l'une des revendications 7 à 9, caractérisée en ce que la pièce (17) en forme de profilé creux comporte une face supérieure (20), courbée vers le haut et construite comme un tronçon d'enveloppe d'un cylindre circulaire, qui sert de surface de guidage pour la tête de moteur (2), pouvant être appliquée sur elle de façon pivotante, et susceptible de manière appropriée d'être bloquée en des positions angulaires déterminées sur la pièce (17), à l'aide d'une vis de serrage (22), la table de sciage (1) pouvant présenter un ouverture (25), obturable de manière appropriée à l'aide d'un curseur (29), à travers laquelle la tête de la vis de serrage (22) est accessible, curseur (29) pouvant être inséré de façon imperdable entre le socle (10) et le patin (11) et guidé sur le socle (10) et/ou le patin (11).

Fig. 1

Fig. 2

Fig. 3

Fig. 4

Fig. 5

Fig. 6

Fig. 7

Fig. 8

Fig. 9

*Fig. 10*

Fig. 11

Fig. 11a

Fig. 12

Fig. 13

Fig. 14